# EUROPÄISCHE PATENTSCHRIFT

(11) **EP 1 820 252 B1**
(45) Veröffentlichungstag und Bekanntmachung des Hinweises auf die Patenterteilung: **18.01.2012**
(21) Anmeldenummer: 05820997.4
(22) Anmeldetag: 29.11.2005
(51) Int. Cl.: H02K 15/04

(54) **VORRICHTUNG UND VERFAHREN ZUM WICKELN EINES SCHEIBENLÄUFERS FÜR EINEN SCHEIBENLÄUFERMOTOR**
DEVICE AND METHOD FOR WINDING A DISK ROTOR FOR A DISK ROTOR MOTOR
DISPOSITIF ET PROCEDE POUR ENROULER UN INDUIT DISCOIDAL DESTINE A UN MOTEUR A INDUIT DISCOIDAL

(30) Priorität: 10.12.2004 DE 102004059889
(43) Veröffentlichungstag der Anmeldung: 22.08.2007
(73) Patentinhaber: Aumann GmbH, 32339 Espelkamp (DE)
(72) Erfinder: KRUSE, Volker, 32425 Minden (DE)
(74) Vertreter: Scheffler, Jörg
(86) Internationale Anmeldenummer: PCT/DE2005/002158
(87) Internationale Veröffentlichungsnummer: WO 2006/063554

(56) Entgegenhaltungen:
- EP-A- 0 072 538
- US-A- 4 756 075
- PATENT ABSTRACTS OF JAPAN Bd. 010, Nr. 233 (E-427), 13. August 1986 (1986-08-13) -& JP 61 066550 A (HITACHI LTD), 5. April 1986 (1986-04-05)

## Beschreibung

Die Erfindung betrifft eine Vorrichtung zum Wickeln eines Scheibenläufers für einen Scheibenläufermotor, insbesondere als Rotor, umfassend einen Antrieb für eine drehbeweglich antreibbare Düse zur Zuführung eines Drahtes für die Wicklung, einen relativ zu der Drehung der Düse stationären Schablonenkörper zum Wickeln des aus der Düse herausgeführten Drahtes, eine erste und eine zweite Führung zum Bewegen der Düse in Richtungen parallel und senkrecht zu einer durch die Drehung der Düse gebildeten Ebene und einen in unterschiedliche Positionen festlegbaren Tisch, auf dem ein Kommutator für den Scheibenläufermotor in einer Wickelaufnahme fixierbar ist, um den mehrere Wicklungseinheiten herum positionierbar sind. Weiterhin betrifft die Erfindung ein Verfahren zur Anwendung bei der Vorrichtung.

Ein Verfahren und eine Vorrichtung zur Herstellung einer Ankerwicklung für einen flachen Elektromotor der genannten Art ist beispielsweise durch die DE 34 22 933 A 1 beschrieben. Die darin offenbarte Vorrichtung umfasst einen Motor, durch den ein Flyer mit einer Düse zur Zuführung eines Drahtes für die Ankerwicklung in Rotation versetzt wird. Der Draht wird dadurch um einen Außenumfang eines Spulenkörpers gewickelt, wenn der Flyer um den Spulenkörper rotiert. Die Düse ist dabei mittels eines ersten und eines zweiten beweglichen Elementes in Richtungen parallel und senkrecht zu einer durch die Drehung der Düse gebildeten Ebene beweglich. Weiterhin hat die Vorrichtung einen Drehtisch, auf dessen mittlerem Bereich ein Kommutator montierbar ist, um den mehrere Wicklungseinheiten herum angeordnet werden können, sowie ein Druckelement zum Drücken des um den Spulenkörper gewickelten Wicklungsdrahts auf den Drehtisch. Ein Führungselement dient dem Auffangen eines Abschnittes des Drahtes zwischen der Düse und der auf dem Drehtisch befindlichen Wicklungseinheit und zum Führen des aufgefangenen Drahtabschnittes in die Nähe eines Hakens des am Drehtisch montierten Kommutators. Außerdem ist eine Steuerschaltung zum Steuern des ersten und zweiten beweglichen Elementes, des Druckelementes und des Führungselementes in Abhängigkeit von Ausgangssignalen eines Elementes zur Erfassung der Umdrehungszahl vorgesehen. Durch die Steuerschaltung wird der erste Motor derart angetrieben, dass der Flyer eine vorgegebene Anzahl von Umläufen um einen die gewünschte Kontur aufweisenden Kernabschnitt des Spulenkörpers ausführt und dadurch eine Wicklungseinheit mit eine vorbestimmten Anzahl von Wicklungen bildet. Die Wicklung erstreckt sich dabei zwischen dem gegenüber dem Kernabschnitt vorspringenden Spulenkörper und einer Heizplatte. Der Draht ist mit einem hitzehärtenden Klebemittel beschichtet, so dass die Wicklungseinheit bei Erreichen der vorbestimmten Anzahl von Wicklungen erhitzt und dadurch benachbarte Bereiche miteinander verbunden werden, die auf diese Weise eine starre Wicklungseinheit bilden. Im darauf folgenden Schritt wird die Wicklungseinheit von dem Spulenkörperkernabschnitt mittels Stiften nach unten auf den Drehtisch abgestreift. Diese Abfolge wird im Anschluss an eine geänderte Positionierung der Wickelaufnahme wiederholt, bis die gewünschten Wicklungseinheiten vollständig eingebracht sind, wobei im Bereich zwischen den Wicklungseinheiten eine Kontaktierung an Kommutatoranschlusshaken erfolgt.

Als nachteilig bei diesem Verfahren und der Vorrichtung zur automatisierten Ankerwicklung hat sich in der Praxis jedoch erwiesen, dass es aufgrund der zunächst einzeln auf dem Kernabschnitt gewickelten Wicklungseinheiten, die anschließend in ihrer vorbestimmten Position an dem Scheibenläufer angeordnet werden müssen, zu insbesondere toleranzbedingten Fehlereinflüssen kommt. Weiterhin ist das Verfahren mit einem erheblichen Zeitaufwand verbunden, weil jede Wicklungseinheit vor der Positionierung zunächst durch Erhitzung zu einer formstabilen Einheit verklebt werden muss. Zudem können durch das Verfahren sehr feine Strukturen nicht realisiert werden, weil sich dabei die Toleranzeinflüsse und die beim Abschieben der Wicklungseinheit auftretenden Verformungen besonders nachteilig auswirken und weil zur Erzielung einer formstabilen Wicklungseinheit eine Mindestanzahl von Wicklungen in Abhängigkeit der Drahtparameter erforderlich ist, die oftmals nicht mit dem konstruktiven Optimum für den Scheibenläufermotor übereinstimmen. Insbesondere sind Wicklungseinheiten mit einer sehr kleinen Anzahl von Wicklungen nicht realisierbar. Weiterhin erfordert das Verfahren den Einsatz von Klebemittel zum Verkleben des Drahtes zu Wicklungseinheiten, weil anderenfalls ein Abschieben der Wicklungseinheiten nicht möglich ist.

Die 36 40 210 C 2 betrifft ein Verfahren zur Herstellung von flachen Ankern für elektrische Motoren, bei dem jeweils eine mit Positionshaltern versehene Wickelaufnahme mit einem Kollektor bestückt wird. Dabei wird auf die mit dem Kollektor bestückte Wickelaufnahme eine durch die Positionshalter in Lage gehaltene Wicklung aus einer Anzahl von aufeinander folgenden Wicklungseinheiten gemäß einem vorbestimmten Anordnungsmuster aufgebracht und dabei die Kontaktierung mit zugeordneten Kommutatoranschlusshaken des Kollektors durchgeführt. Die Wicklungseinheiten werden dabei jeweils fortlaufend ein einer Reihe hintereinander liegend in einer getrennten Wickeleinrichtung gewickelt und durch Schmelzverklebung in Form gehalten sowie anschließend mittels der Wickelaufnahme untereinander verfestigt. Danach werden die Wicklungseinheiten nach einer relativen Positionierung der Wickelaufnahme gegenüber der Halteeinrichtung der Wicklungseinheit nacheinander auf ein jeweiliges Paar der Positionshalter der Wickelaufnahme übertragen.

Als nachteilig zeigt sich dabei die unzureichende Fertigungsgenauigkeit bei der Positionierung der einzelnen Wicklungseinheiten, die sich insbesondere hinsichtlich der zunehmenden Miniaturisierung solcher Antriebe als hinderlich erweist.

Ferner ist auch durch die EP 00 72 538 B 1 eine Vorrichtung zum Wickeln eines Scheibenläufers mit einer antreibbaren Düse zur Zuführung eines Drahtes für die Wicklung und einem in unterschiedliche Positionen festlegbaren Drehtisch bekannt, auf dem ein Kommutator für den Scheibenläufermotor in einer Wickelaufnahme fixierbar ist, um den mehrere Wicklungseinheiten herum positioniert werden. Die Vorrichtung hat hierzu ein relativ zu der Drehung der Düse stationäres Gegenlager welches in eine vorbestimmte relative Funktionsstellung gegenüber Positionshaltern für die Wicklung beweglich ist, so dass die Wicklung zwischen dem Gegenlager und der Wickelaufnahme erfolgt.

Als nachteilig erweist sich hierbei jedoch die im Verlauf einer Wicklung veränderliche Drahtspannung, durch die der Draht in unerwünschter Weise beansprucht wird und dadurch eine ungenaue Drahtführung nicht auszuschließen ist.

US 4756075 offenbart eine Vorrichtung gemäβ dem Oberbegriff des Ansprunch 1 und ein Verfahren gemäβ dem Oberbegriff des Anspruchs 14.

Der Erfindung liegt die Aufgabe zugrunde, eine Möglichkeit zu schaffen, die vorstehend genannten Nachteile des jeweiligen Standes der Technik zu vermeiden und insbesondere zugleich eine hochgradige Automatisierung sowie eine Fertigung selbst feinster Strukturen bei zugleich hohen Qualitätsanforderungen realisieren zu können. Weiterhin liegt der Erfindung die Aufgabe zugrunde, ein Verfahren zur Anwendung bei der Vorrichtung zu schaffen. Die erstgenannte Aufgabe wird erfindungsgemäß mit einer Vorrichtung gemäß den Merkmalen der Anspruchs 1 gelöst. Die weitere Ausgestaltung der Erfindung ist den Unteransprüchen 2 bis 13 zu entnehmen.

Erfindungsgemäß hat also eine Vorrichtung ein relativ zu der Drehung der Düse stationäres Gegenlager welches in eine vorbestimmte relative Funktionsstellung gegenüber Positionshaltern der Wickelaufnahme für die Wicklung beweglich ist, so dass durch den Abstand des Gegenlagers zu der Wickelaufnahme die Höhe einer Wicklungseinheit bestimmt ist und die Wicklungen unmittelbar in ihrer vorbestimmten relativen Position gegenüber dem Kommutator anordbar sind.

Die Erfindung geht dabei von der Erkenntnis aus, dass die Anforderungen an die Qualität des Scheibenläufers dadurch wesentlich verbessert werden können, dass die Wicklungen nicht in Form von zunächst von dem Kommutator unabhängigen Wicklungseinheiten, sondern unmittelbar in der gewünschten relativen Position an dem Kommutator angeordnet werden. Auf diese Weise können die Wicklungseinheiten aus einer nahezu beliebigen Anzahl von Wicklungen hergestellt und dadurch kleinste Strukturen erzeugt werden. Zudem entfällt das nach dem Stand der Technik erforderliche Verschmelzen zu einer formstabilen Wicklungseinheit vor der Positionierung der Wicklungseinheit, so dass eine Klebstoffschicht grundsätzlich entbehrlich ist. Auf diese Weise kann zugleich auch die Prozessdauer wesentlich verringert werden, um so die Herstellungskosten zu vermindern. Dabei folgt die den Draht zuführende Düse der äußeren, insbesondere von einer Rotationssymmetrie abweichenden Querschnittsform bestimmten Kontur des Schablonenkörpers, so dass die Drahtspannung der einzelnen Wicklungen über den gesamten Umlauf konstant gehalten werden kann.

Die Düse liegt gegen den Schablonenkörper am Umfang an, so dass die erforderliche radiale Bewegung entgegen der Rückstellkraft eines Federelementes ohne zusätzlichen Antrieb erzeugt werden kann. Die Schablone kann dabei insbesondere austauschbar ausgeführt sein.

Eine besonders vorteilhafte Ausführungsform der vorliegenden Erfindung wird auch dann erreicht, wenn das Gegenlager Ausnehmungen, insbesondere Durchbrechungen für die Positionshalter aufweist. Hierdurch wird eine eindeutige relative Positionierung des Gegenlagers gegenüber dem Positionshalter sichergestellt, die zudem eine einfache visuelle sowie auch mittels geeigneter Sensorik automatisiert durchführbare Kontrolle der relativen Positionierung gestattet. Ein Abgleiten des Drahtes zwischen Positionshalter und Gegenlager ist dadurch zugleich zuverlässig ausgeschlossen.

Dabei erweist es sich weiterhin als besonders zweckmäßig, wenn die Ausnehmungen in der vorbestimmten Funktionsstellung die Positionshalter formschlüssig aufnehmen, so dass die vorbestimmte relative Position zugleich auch durch die dabei als Höhenanschlag wirkende formschlüssige Wickelaufnahme der Positionshalter bestimmt und daher mit hoher Genauigkeit beliebig reproduzierbar ist.

Der Schablonenkörper kann nahezu jede konkave Formgebung aufweisen. Besonders praxisgerecht ist hingegen eine Abwandlung, bei welcher der Schablonenkörper die Form eines Polygons aufweist, um so die Anforderungen an optimierte Scheibenläufergeometrie realisieren zu können.

Dabei erweist es sich zudem als besonders empfehlenswert, wenn die äußeren Abmessungen des Schablonenkörpers die durch die Positionshalter bestimmte Kontur lediglich geringfügig übersteigt, so dass der Abstand zwischen Düsenöffnung und bereits hergestellter Wicklung äußerst gering gehalten werden kann. Dadurch wird zugleich eine im Wesentlichen konstante Drahtspannung sichergestellt.

Der Schablonenkörper und/oder das Gegenlager sind an einer durch den Antrieb drehbeweglichen Wickelaufnahme angeordnet sind, wobei die relativ zu der Drehung der Düse stationäre Anordnung des Schablonenkörpers und/oder Gegenlagers durch einen eine gegensinnige Drehbewegung einleitenden Rotationsantrieb realisiert ist, so dass eine mechanische Verbindung zwischen dem Gegenlager oder dem ebenfalls unbeweglich festzulegenden Schablonenkörper einerseits sowie den Positionshaltern andererseits nicht erforderlich ist, um die relative stationäre Anordnung zu realisieren. Zudem sind die Positionshalter dadurch frei von Drehmomenten, so dass die Beanspruchung der Positionshalter wesentlich verringert ist.

Dabei erweist es sich als besonders praxisgerecht, wenn der Rotationsantrieb ein endlos umlaufendes Kraftübertragungselement aufweist, welches an einem relativ zu der Drehung der Düse stationären Abschnitt der Vorrichtung geführt ist. Das Kraftübertragungselement ist dabei beispielsweise als ein umlaufender Zahnriemen ausgeführt, welcher einerseits an einer an der Vorrichtung fixierten Zahnriemenscheibe stationär festgelegt ist, andererseits die Antriebsleistung auf eine Welle überträgt, welche den der Drehbewegung entgegenwirkenden Rotationsantrieb überträgt.

Zum Bewickeln der Positionshalter mit der gewünschten Wicklungszahl sind ein erster Antrieb zur axialen Verfahrbewegung der Düse zur Erzielung nebeneinander liegender Wicklungen sowie ein zweiter Antrieb zur Einleitung der Rotationsbewegung der Düse erforderlich. Zur relativen Positionierung des Gegenlagers gegenüber den Positionshaltern ist es jedoch von Vorteil, wenn die Vorrichtung zur Positionierung des Gegenlagers relativ zu unterschiedlichen Positionshaltern in einer Ebene quer zu der Rotationsachse in zwei Koordinatenachsen verfahrbar ist und der Tisch als ein Drehtisch ausgeführt ist, um so eine einfache Positionierung sowie Einstellung der jeweils erforderlichen Winkelstellung zu ermöglichen.

Als besonders Erfolg versprechend erweist es sich zudem, wenn die Vorrichtung einen zusätzlichen Antrieb für die Verfahrbarkeit parallel zu der Drehachse aufweist, so dass die Positionierung des Gegenlagers gegenüber den Positionshaltern ohne eine Änderung der relativen Position der Düse gegenüber dem Schablonenkörper erfolgen kann, so dass die Positionierung mit einem geringen Steuerungsaufwand erreicht und die Verfahrbarkeit des Düsenantriebes auf die erforderliche Wicklungshöhe beschränkt werden kann.

Weiterhin ist es besonders zweckmäßig, wenn die Vorrichtung mehrere zugleich antreibbaren Düsen für mehrere Scheibenläufer hat, um so eine einfache parallele Fertigung mit lediglich geringfügig erhöhtem Steuerungsaufwand zu erreichen. Insbesondere können mehrere oder alle erforderlichen Antriebe durch einen gemeinsamen Motor realisiert werden.

Weiterhin ist es besonders sinnvoll, wenn der Kommutator in mehrere Kommutatorsegmente unterteilt ist, denen jeweils ein Kommutatoranschlusshaken zugeordnet ist, an welchem der Draht zwischen benachbarten Wicklungseinheiten kontaktiert ist, um so die automatische Verschaltung der Wicklungen an dem Kommutator zu erreichen.

Zur Fertigstellung des Scheibenläufers können die in ihrer vorgesehenen Position angeordneten und am Kommutator kontaktierten Wicklungseinheiten durch eine thermische Klebeverbindung, insbesondere mittels einer thermoplastischen Beschichtung des Drahtes durch Einleitung eines die Erweichungstemperatur der Beschichtung erzeugenden Stromstosses verklebt werden. Zugleich kann mittels eines Stempels eine Formgebung insbesondere Konturierung in axialer Richtung erfolgen.

Die zweitgenannte Erfindung, ein Verfahren zum Wickeln eines Scheibenläufers für einen Scheibenläufermotor, bei dem eine Düse zur Zuführung eines Drahtes für die Wicklung rotationsbeweglich angetrieben wird, die gegen einen Umfang eines relativ zu der Drehung der Düse stationären Schablonenkörper anliegt und quer zu der Rotationsachse beweglich geführt wird, zur Anwendung bei der Vorrichtung zu schaffen, wird erfindungsgemäß dadurch erreicht, dass ein relativ zu der Drehung der Düse stationäres Gegenlager relativ zu einem in einer Wickelaufnahme fixierten Kommutator für den Scheibenläufermotor positioniert und dadurch die Wicklungen zwischen dem Gegenlager und der Wickelaufnahme um Positionshalter herum aufgrund der Rotation der Düse als Wicklungseinheiten in ihrer vorbestimmten relativen Position gegenüber dem Kommutator erzeugt werden. Hierdurch werden die Wicklungen und Wicklungseinheiten unmittelbar in ihrer späteren Position an dem Scheibenläufer gewickelt, so dass mögliche Fehlereinflüsse aufgrund der nach dem Stand der Technik erforderlichen nachträglichen Positionierung einzelner Wicklungseinheiten entfällt. Zugleich kann auf die Herstellung der Wicklungseinheiten als einzeln handhabbare, insbesondere formstabile Einheiten verzichtet werden, wodurch der Steuerungsaufwand sowie die Prozessdauer reduziert werden kann. Weiterhin wird eine konstante Drahtspannung über die gesamte Drahtlänge des Scheibenläufers erreicht.

Eine besonders zweckmäßige Ausgestaltung des Verfahrens wird dabei auch dann erreicht, wenn zur Erzeugung aufeinander folgender Wicklungseinheiten zunächst der Draht an den Kommutatoranschlusshaken insbesondere durch eine Schweißverbindung kontaktiert und anschließend das Gegenlager in einer geänderten relativen Winkelstellung bezüglich der Scheibenläuferachse positioniert wird. Die Kontaktierung erfolgt dadurch gleichsam während des Wicklungsprozesses und nicht etwa wie beim Stand der Technik üblich, in einem separaten Arbeitsgang, so dass die Prozessdauer weiter verringert werden kann. Die Art und Verteilung der Wicklungseinheiten ist dadurch nicht durch fertigungstechnische Gegebenheiten in unerwünschter Weise beschränkt, so dass diese entsprechend der gewünschten Eigenschaften des Scheibenläufers realisiert werden können.

Beispielsweise können daher gemäß einer besonders Praxis gerechten Abwandlung aufeinander folgende Wicklungseinheiten frei von Überlappungen angeordnet werden.

Die Erfindung lässt verschiedene Ausführungsformen zu. Zur weiteren Verdeutlichung ihres Grundprinzips ist eine davon in der Zeichnung dargestellt und wird nachfolgend beschrieben.
Diese zeigt in
- Fig.1: eine erfindungsgemäße Vorrichtung zum Wickeln eines in Figur 2 gezeigten Scheibenläufers in einer perspektivischen Darstellung;
- Fig.2: einen in einer Wickelaufnahme gehaltenen Scheibenläufer in einer perspektivischen Darstellung;
- Fig.3: eine Schnittdarstellung der in Figur 1 gezeigten Vorrichtung.

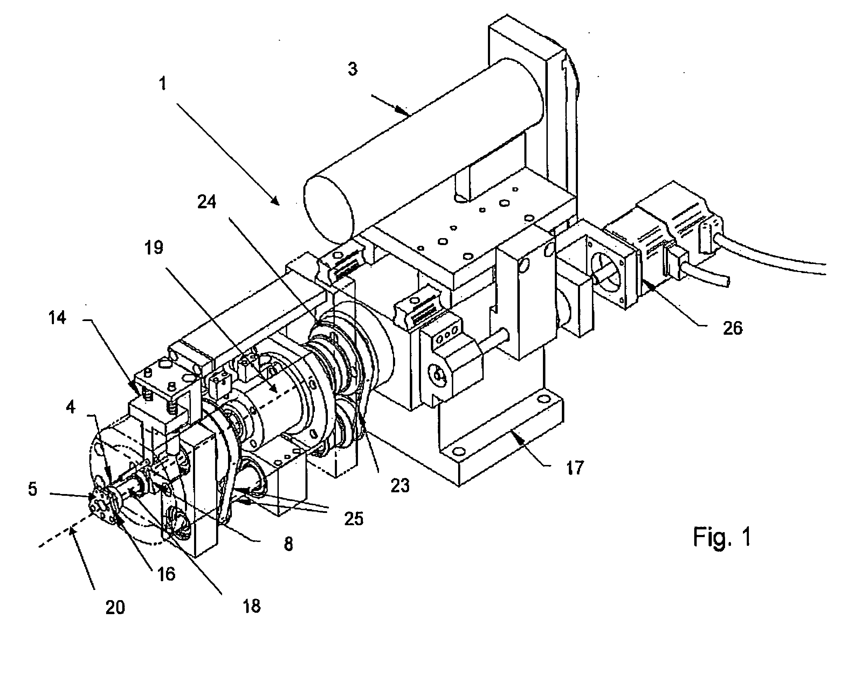

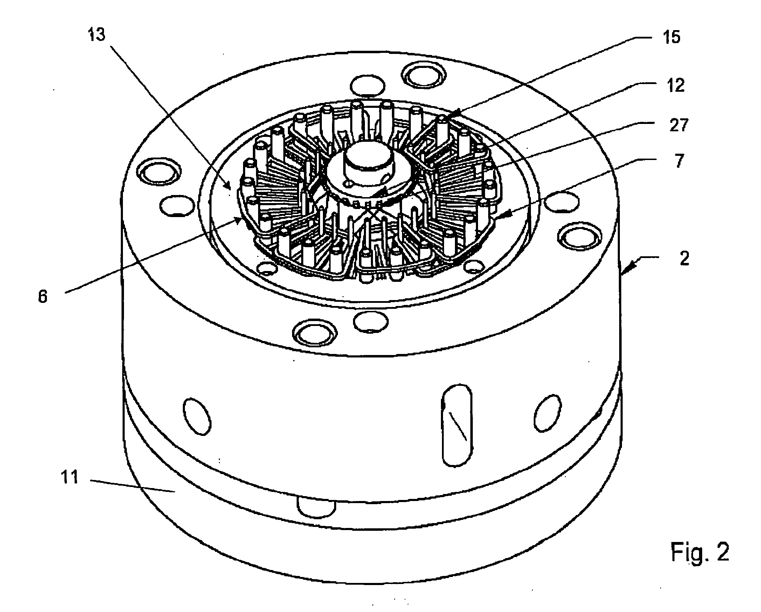

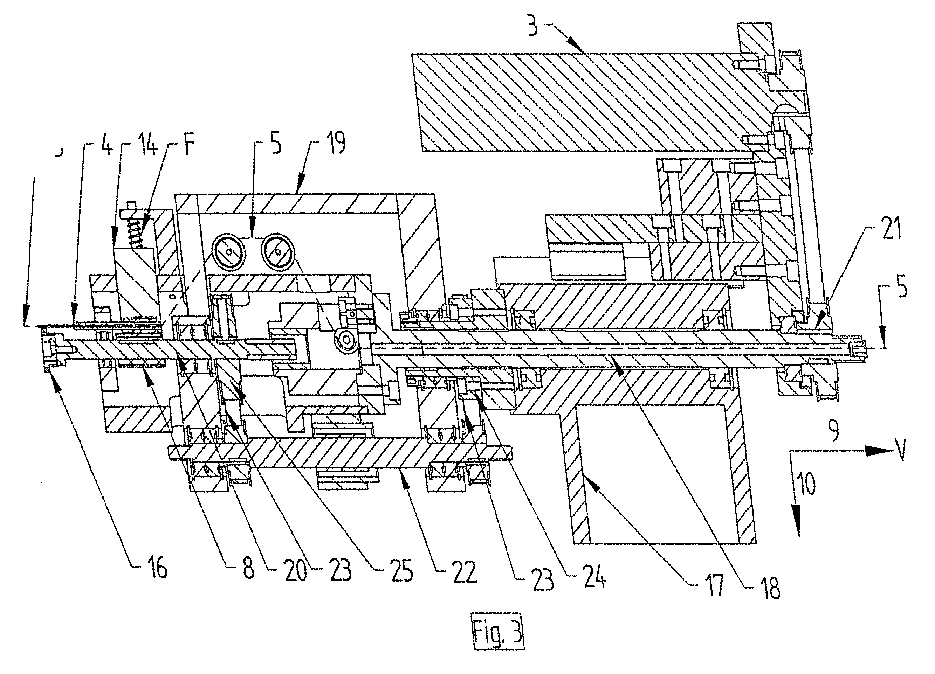

Die erfindungsgemäße Vorrichtung 1 wird nachstehend anhand der Figuren 1 bis 3 näher dargestellt. Diese zeigen die Vorrichtung 1 sowie eine Wickelaufnahme 2 in einer jeweils perspektivischen Darstellung. Die Vorrichtung 1 hat einen Antrieb 3 für eine drehbeweglich antreibbare Düse 4 zur Zuführung eines Drahtes 5 für mehrere jeweils Wicklungseinheiten 6 bildende Wicklungen 7. Die Düse 4 liegt gegen den Umfang eines relativ zu der Drehung der Düse 4 stationären Schablonenkörpers 8 an, der eine der gewünschten Wicklungseinheit 6 entsprechende Polygonform aufweist. Zur Anordnung der Wicklungen 7 ist eine erste Führung 9 und eine zweite Führung 10 zum Bewegen der Düse 4 in Richtungen parallel und senkrecht zu einer durch die Drehung der Düse 4 gebildeten Ebene vorgesehen. Zur Einstellung unterschiedlicher Winkelstellungen ist ein verfahrbarer, als Drehtisch ausgeführter Tisch 11 vorgesehen, auf dem ein Kommutator 12 für einen Scheibenläufer 13 in einer Wickelaufnahme 2 lösbar fixiert ist. Die Wickelaufnahme 2 hat mehrere Positionshalter 15, welche die äußere Kontur der Wicklungen 7 begrenzen. Um die Höhe der Wicklungseinheiten 6 variabel festlegen zu können, hat die Vorrichtung 1 ein relativ zu der Drehung der in einer Düsenaufnahme 14 gehaltenen Düse 4 stationäres Gegenlager 16, welches in eine vorbestimmte relative Funktionsstellung gegenüber den Positionshaltern 15 der Wickelaufnahme 2 beweglich ist, so dass die Wicklungen 7 unmittelbar in ihrer vorbestimmten relativen Position gegenüber dem Kommutator 12 angeordnet werden können. Die Vorrichtung 1 hat dabei einen einen Grundträger 17 aufnehmenden, nicht gezeigten 3-Koordinatentisch, welcher in X-Y-Z-Richtung verfahrbar ist. Diese Verfahrbewegung dient dabei lediglich der Positionierung des gegenüber der Wickelaufnahme 2 beim Wickelprozess unbeweglichen Gegenlagers 16 relativ zu der Wickelaufnahme 2, wobei zugleich die Positionshalter 15 in Öffnungen des Gegenlagers 16 eingreifen, um so die Relativposition zuverlässig sicherzustellen.

Der Bewegungsablauf nach der Positionierung des Gegenlagers 16 umfasst insbesondere eine Bewegung der Düse 4 um den Umfang des Gegenlagers 16 und die Positionshalter 15 sowie eine vertikale Verlegebewegung in Achsrichtung der Düse 4, um so die Wicklungen 7 nebeneinander verlegen zu können. Eine die Düse 4 in Rotation versetzende, als Servoachse ausgeführte Welle 18 wird dem als Servomotor ausgeführten Antrieb 3 drehbeweglich angetrieben. Dadurch wird ein Träger 19 in Rotation versetzt, der die durch Federkraft F vorgespannte und radial bewegliche Düse 4 trägt. Die Düse 4 rotiert dadurch um eine Achse 20 und liegt dabei gegen den Umfang des die Polygonform aufweisenden Schablonenkörpers 8 an, der geringfügig größer als die durch die Positionshalter 15 bestimmte Kontur bemessen ist. Auf diese Weise wird die gewünschte Kontur der Wicklungseinheiten 6 mit konstanter Drahtspannung erzeugt.

Um zu erreichen, dass das Gegenlager 16 nicht rotiert, wird durch einen eine gegensinnige Drehbewegung einleitenden Rotationsantrieb 21 eine an dem Träger 19 gelagerte Antriebswelle 22 angetrieben. Die Antriebswelle 22 ist über ein als Zahnriemen ausgeführtes endlos umlaufendes Kraftübertragungselement 23 mit einer Zahnriemenscheibe 24 verbunden, die unbeweglich an dem Grundträger 17 fixiert ist. Es entsteht also eine Relativdrehbewegung der Antriebswelle 22 gegenüber der Welle 18, die durch ein zweites Kraftübertragungselement 25 auf den Schablonenkörper 8 übertragen wird. Eine Relativdrehbewegung gegenüber dem Grundträger 17 ist dadurch ausgeschlossen. Dabei wird die stationäre Anordnung des Gegenlagers 16 gegenüber der Wickelaufnahme 2 ohne eine mechanische Verbindung realisiert.

Die vertikale Verlegebewegung V der Düse 4 wird durch einen zweiten, ebenfalls als Servoachse ausgeführten Antrieb 26 eingeleitet, wobei das Gegenlager 16 nicht bewegt wird. Hierzu ist das Gegenlager 16 in einer nicht dargestellten Kugelbuchse verschiebbar.

Die einzelnen Wicklungseinheiten 6 weisen eine Polygon-Form auf, wobei aufeinander folgende Wicklungen 7 versetzt angeordnet sind und einander überlappen können. Zwischen den Wicklungseinheiten 6 wird der Draht 5 um einen Kommutatoranschlusshaken 27 gewickelt und dort später durch Widerstandsschweißen thermisch verschweißt, indem die elektrische Isolierung in diesem Bereich aufgeschmolzen und eine Verbindung zwischen dem Draht 5 und dem Kommutatoranschlusshaken 27 hergestellt wird.

Nach der Fertigstellung der Wicklungseinheiten 6 werden diese durch Stromzufuhr erwärmt, so dass eine äußere, thermoplastische Isolierschicht erweicht und unter Druck mittels eines nicht gezeigten Stempels, welcher eine Negativkontur zu den Polygon-Formen der Wicklungen 7 aufweist, verbacken, so dass ein formstabiles Gebilde entsteht. Dabei wird durch den Stempel zugleich am Umfang der Wicklungseinheiten 6 eine aufgebogene Randkontur erzeugt. Anschließend können die Positionshalter 15 abgesenkt und der Scheibenläufer 13 entnommen werden.

## Patentansprüche

1. Vorrichtung (1) zum Wickeln eines Scheibenläufers (13) für einen Scheibenläufermotor, insbesondere als Rotor, umfassend einen Antrieb (3) für eine drehbeweglich antreibbare Düse (4) zur Zuführung eines Drahtes (5) für eine Wicklung (7), einen relativ zu der Drehung der Düse (4) stationären Schablonenkörper (8) zum Wickeln des aus der Düse (4) herausgeführten Drahtes (5), eine erste Führung (9) und eine zweite Führung (10) zum Bewegen der Düse (4) in Richtungen parallel und senkrecht zu einer durch die Drehung der Düse (4) gebildeten Ebene und einen in unterschiedliche Positionen festlegbaren Tisch (11), auf dem ein Kommutator (12) für den Scheibenläufermotor in einer Wickelaufnahme (2) fixierbar ist, um den mehrere Wicklungseinheiten (6) herum positionierbar sind, mit einem relativ zu der Drehung der Düse (4) stationären Gegenlager (16), welches in eine vorbestimmte relative Funktionsstellung gegenüber Positionshaltern (15) der Wickelaufnahme (2) für die Wicklung (7) bringbar ist, sodass durch den Abstand des Gegenlagers (16) zu der Wickelaufnahme (2) die Höhe einer Wicklungseinheit (6) bestimmbar ist und die Wicklungen (7) unmittelbar in ihrer vorbestimmten relativen Position gegenüber dem Kommutator (12) erzeugbar sind, **dadurch gekennzeichnet, dass** die relativ zu der Drehung der Düse (4) stationäre Anordnung des Schablonenkörpers (8) und des Gegenlagers (16) durch einen eine zu der Drehung der Düse (4) gegensinnige Drehbewegung einleitenden und durch die Relativbewegung von Düse (4) und stationärem Abschnitt der Vorrichtung (1) angetriebenen Rotationsantrieb (21) realisiert ist und die Düse (4) gegen den Schablonenkörper (8) am Umfang anliegt.

2. Vorrichtung (1) nach Anspruch 1, **dadurch gekennzeichnet, dass** das Gegenlager (16) Ausnehmungen, insbesondere Durchbrechungen für die Positionshalter aufweist.

3. Vorrichtung (1) nach Anspruch 2, **dadurch gekennzeichnet, dass** die Ausnehmungen in der vorbestimmten Funktionsstellung die Positionshalter (15) formschlüssig aufnehmen.

4. Vorrichtung (1) nach zumindest einem der vorhergehenden Ansprüche, **dadurch gekennzeichnet, dass** die Düse (4) mittels einer Federkraft (F) gegenüber dem Schablonenkörper (8) vorgespannt ist.

5. Vorrichtung (1) nach zumindest einem der vorhergehenden Ansprüche, **dadurch gekennzeichnet, dass** der Schablonenkörper (8) die Form eines Polygons aufweist.

6. Vorrichtung (1) nach zumindest einem der vorhergehenden Ansprüche, **dadurch gekennzeichnet, dass** die äußeren Abmessungen des Schablonenkörpers (8) die durch die Positionshalter (15) bestimmte Kontur lediglich geringfügig übersteigen.

7. Vorrichtung (1) nach zumindest einem der vorhergehenden Ansprüche, **dadurch gekennzeichnet, dass** der Schablonenkörper (8) und/oder das Gegenlager (16) an der durch den Antrieb (3) drehbeweglichen Wickelaufnahme (2) angeordnbar sind.

8. Vorrichtung (1) nach Anspruch 7, **dadurch gekennzeichnet, dass** der Rotationsantrieb (21) ein endlos umlaufendes Kraftübertragungselement (23) aufweist, welches an einem relativ zu der Drehung der Düse (4) stationären Abschnitt der Vorrichtung (1) geführt ist.

9. Vorrichtung (1) nach zumindest einem der vorhergehenden Ansprüche, **dadurch gekennzeichnet, dass** die Vorrichtung (1) zur Positionierung des Gegenlagers (16) relativ zu den Positionshaltern (15) in zwei Koordinatenachsen verfahrbar ist.

10. Vorrichtung (1) nach zumindest einem der vorhergehenden Ansprüche, **dadurch gekennzeichnet, dass** der Tisch (11) als ein Drehtisch ausgeführt ist.

11. Vorrichtung (1) nach zumindest einem der vorhergehenden Ansprüche, **dadurch gekennzeichnet, dass** die Vorrichtung (1) einen zusätzlichen Antrieb (26) für die Verfahrbarkeit parallel zu der die Düse (4) in Rotation versetzenden Welle (18) aufweist.

12. Vorrichtung (1) nach zumindest einem der vorhergehenden Ansprüche, **dadurch gekennzeichnet, dass** die Vorrichtung (1) mehrere zugleich antreibbare Düsen (4) für mehrere Scheibenläufer (13) hat.

13. Vorrichtung (1) nach zumindest einem der vorhergehenden Ansprüche und Kommutator (12), **dadurch gekennzeichnet, dass** der Kommutator (12) in mehrere Kommutatorsegmente unterteilt ist, denen jeweils ein Kommutatoranschlusshaken (27) zugeordnet ist, an welchem der Draht (5) zwischen benachbarten Wicklungseinheiten (6) kontaktiert ist.

14. Verfahren zum Wickeln eines Scheibenläufers für einen Scheibenläufermotor, bei dem eine Düse zur Zuführung eines Drahtes für die Wicklung rotationsbeweglich angetrieben wird, wobei ein relativ zu der Drehung der Düse stationäres Gegenlager relativ zu einem in einer Wickelaufnahme fixierten Kommutator für den Scheibenläufermotor positioniert wird und dadurch die Wicklungen zwischen dem Gegenlager und der Wickelaufnahme um Positionshalter herum aufgrund der Rotation der Düse als Wicklungseinheiten in ihrer vorbestimmten relativen Position gegenüber dem Kommutator erzeugt werden, **dadurch gekennzeichnet, dass** die Düse gegen einen Umfang eines relativ zu der Drehung der Düse stationären Schablonenkörpers anliegt und quer zu der Rotationsachse beweglich geführt wird.

15. Verfahren nach Anspruch 14, **dadurch gekennzeichnet, dass** zur Erzeugung aufeinander folgender Wicklungseinheiten zunächst der Draht an den Kommutatoranschlusshaken insbesondere durch eine Schweißverbindung kontaktiert und anschließend das Gegenlager in einer geänderten relativen Winkelstellung bezüglich der Scheibenläuferachse positioniert wird.

16. Verfahren nach Anspruch 14 oder 15, **dadurch gekennzeichnet, dass** aufeinander folgende Wicklungseinheiten frei von Überlappungen angeordnet werden.

## Claims

1. Apparatus (1) for winding a disc rotor (13) for a disc rotor motor, in particular as a rotor, comprising a drive (3) for a nozzle (4), which can be driven in rotation, for feeding a wire (5) for a winding (7), a template body (8), which is stationary relative to the rotation of the nozzle (4), for winding the wire (5) which is routed out of the nozzle (4), a first guide (9) and a second guide (10) for moving the nozzle (4) in directions parallel and perpendicular to a plane which is formed by the rotation of the nozzle (4), and a table (11) which can be secured in different positions and on which a commutator (12) for the disc rotor motor can be fixed in a winding receptacle (2), around which commutator a plurality of winding units (6) can be positioned, having a mating bearing (16) which is stationary relative to the rotation of the nozzle (4) and can be moved to a predetermined relative functional position with respect to position holders (15) of the winding receptacle (2) for the winding (7), so that the height of a winding unit (6) can be determined by the distance between the mating bearing (16) and the winding receptacle (2) and the windings (7) can be produced directly in their predetermined relative position with respect to the commutator (12), **characterized in that** the arrangement of the template body (8) and of the mating bearing (16) which is stationary relative to the rotation of the nozzle (4) is realized by a rotary drive (21) which initiates a rotary movement in the opposite direction to the rotation of the nozzle (4) and is driven by the relative movement of the nozzle (4) and the stationary section of the apparatus (1), and the nozzle (4) bears against the template body (8) at the circumference.

2. Apparatus (1) according to Claim 1, **characterized in that** the mating bearing (16) has recesses, in particular apertures for the position holders.

3. Apparatus (1) according to Claim 2, **characterized in that** the recesses accommodate the position holders (15) in an interlocking manner in the predetermined functional position.

4. Apparatus (1) according to at least one of the preceding claims, **characterized in that** the nozzle (4) is prestressed with respect to the template body (8) by means of a spring force (F).

5. Apparatus (1) according to at least one of the preceding claims, **characterized in that** the template body (8) has the shape of a polygon.

6. Apparatus (1) according to at least one of the preceding claims, **characterized in that** the external dimensions of the template body (8) only slightly exceed the contour which is determined by the position holders (15).

7. Apparatus (1) according to at least one of the preceding claims, **characterized in that** the template body (8) and/or the mating bearing (16) can be arranged on the winding receptacle (2) which can be made to rotate by the drive (3).

8. Apparatus (1) according to Claim 7, **characterized in that** the rotary drive (21) has a continuously circulating force-transmission element (23) which is routed on a section of the apparatus (1) which is stationary relative to the rotation of the nozzle (4).

9. Apparatus (1) according to at least one of the preceding claims, **characterized in that** the apparatus (1) can be moved in two coordinate axes in order to position the mating bearing (16) relative to the position holders (15).

10. Apparatus (1) according to at least one of the preceding claims, **characterized in that** the table (11) is designed as a rotary table.

11. Apparatus (1) according to at least one of the preceding claims, **characterized in that** the apparatus (1) has an additional drive (26) for the purpose of providing mobility parallel to the shaft (18) which makes the nozzle (4) rotate.

12. Apparatus (1) according to at least one of the preceding claims, **characterized in that** the apparatus (1) has a plurality of nozzles (4), which can be driven at the same time, for a plurality of disc rotors (13).

13. Apparatus (1) according to at least one of the preceding claims and commutator (12), **characterized in that** the commutator (12) is divided into a plurality of commutator segments which each have an associated commutator connection hook (27) at which contact is made with the wire (5) between adjacent winding units (6).

14. Method for winding a disc rotor for a disc rotor motor, in which a nozzle for feeding a wire for the winding is driven in rotation, wherein a mating bearing which is stationary relative to the rotation of the nozzle is positioned relative to a commutator, which is fixed in a winding receptacle, for the disc rotor motor and, as a result, the windings are produced between the mating bearing and the winding receptacle around position holders as winding units in their predetermined relative positions with respect to the commutator on account of the rotation of the nozzle, **characterized in that** the nozzle bears against a circumference of a template body which is stationary relative to the rotation of the nozzle and is routed so as to move transverse to the rotation axis.

15. Method according to Claim 14, **characterized in that**, in order to produce successive winding units, first contact is made with the wire at the commutator connection hook, in particular by a welded connection, and then the mating bearing is positioned in a changed relative angular position in relation to the disc rotor axis.

16. Method according to Claim 14 or 15, **characterized in that** successive winding units are arranged without overlaps.

## Revendications

1. Dispositif (1) pour enrouler un induit discoïdal (13) destiné à un moteur à induit discoïdal, en particulier comme rotor, comprenant un entraînement (3) pour une buse (4) pouvant être entraînée en mouvement de rotation pour l'amenée d'un fil (5) destiné à un enroulement (7), un corps de gabarit (8) stationnaire par rapport à la rotation de la buse (4) pour l'enroulement du fil (5) sortant de la buse (4), un premier guide (9) et un deuxième guide (10) pour le déplacement de la buse (4) dans des directions parallèle et perpendiculaire à un plan formé par la rotation de la buse (4) et une table (11) pouvant être fixée dans différentes positions, sur laquelle un commutateur (12) pour le moteur à induit discoïdal peut être fixé dans un logement d'enroulement (2), autour duquel plusieurs unités d'enroulement (6) peuvent être positionnées, avec un appui (16) stationnaire par rapport à la rotation de la buse (4), qui peut être amené dans une position de fonctionnement prédéterminée relative par rapport à des supports de position (15) du logement d'enroulement (2) pour l'enroulement (7), de telle manière que la hauteur d'une unité d'enroulement (6) puisse être déterminée par la distance de l'appui (16) au logement d'enroulement (2) et que les enroulements (7) puissent être produits directement dans leur position prédéterminée relative par rapport au commutateur (12), **caractérisé en ce que** l'agencement du corps de gabarit (8) et de l'appui (16), stationnaire par rapport à la rotation de la buse (4), est réalisé par un entraînement de rotation (21) introduisant un mouvement de rotation de sens contraire à la rotation de la buse (4) et entraîné par le mouvement relatif de la buse (4) et de la partie stationnaire du dispositif (1) et la buse (4) s'applique en périphérie sur le corps de gabarit (8).

2. Dispositif (1) selon la revendication 1, **caractérisé en ce que** l'appui (16) présente des évidements, en particulier des interruptions pour les supports de position.

3. Dispositif (1) selon la revendication 2, **caractérisé en ce que** les évidements contiennent les supports de position (15) par complémentarité de forme dans la position de fonctionnement prédéterminée.

4. Dispositif (1) selon au moins une des revendications précédentes, **caractérisé en ce que** la buse (4) est précontrainte par rapport au corps de gabarit (8) au moyen d'une force de ressort (F).

5. Dispositif (1) selon au moins une des revendications précédentes, **caractérisé en ce que** le corps de gabarit (8) présente la forme d'un polygone.

6. Dispositif (1) selon au moins une des revendications précédentes, **caractérisé en ce que** les dimensions extérieures du corps de gabarit (8) ne dépassent que légèrement le contour déterminé par les supports de position (15).

7. Dispositif (1) selon au moins une des revendications précédentes, **caractérisé en ce que** le corps de gabarit (8) et/ou l'appui (16) sont disposés sur le logement d'enroulement (2) entraîné en rotation par l'entraînement (3).

8. Dispositif (1) selon la revendication 7, **caractérisé en ce que** l'entraînement de rotation (21) présente un élément de transmission de force tournant sans fin (23), qui est guidé sur une partie du dispositif (1) stationnaire par rapport à la rotation de la buse (4).

9. Dispositif (1) selon au moins une des revendications précédentes, **caractérisé en ce que** le dispositif (1) peut être déplacé selon deux axes de coordonnées par rapport aux supports de position (15) pour le positionnement de l'appui (16).

10. Dispositif (1) selon au moins une des revendications précédentes, **caractérisé en ce que** la table (11) est constituée par une table tournante.

11. Dispositif (1) selon au moins une des revendications précédentes, **caractérisé en ce que** le dispositif (1) présente un entraînement supplémentaire (26) pour la mobilité parallèlement à l'arbre (18) qui met la buse (4) en rotation.

12. Dispositif (1) selon au moins une des revendications précédentes, **caractérisé en ce que** le dispositif (1) comporte plusieurs buses (4) pouvant être entraînées en même temps pour plusieurs induits discoïdaux (13).

13. Dispositif (1) selon au moins une des revendications précédentes et le commutateur (12), **caractérisé en ce que** le commutateur (12) est divisé en plusieurs segments de commutateur, auxquels est respectivement associé un crochet de raccord de commutateur (27), sur lequel le fil (5) est contacté entre des unités d'enroulement voisines (6).

14. Procédé pour enrouler un induit discoïdal destiné à un moteur à induit discoïdal, dans lequel une buse est entraînée en un mouvement de rotation pour l'amenée d'un fil destiné à l'enroulement, dans lequel on positionne un appui stationnaire par rapport à la rotation de la buse par rapport à un commutateur, fixé dans un logement d'enroulement, pour le moteur à induit discoïdal, et on produit ainsi les enroulements entre l'appui et le logement d'enroulement autour de supports de position par suite de la rotation de la buse comme des unités d'enroulement dans leur position prédéterminée relative par rapport au commutateur, **caractérisé en ce que** la buse s'applique contre une périphérie d'un corps de gabarit stationnaire par rapport à la rotation de la buse et est guidée en mouvement transversalement à l'axe de rotation.

15. Procédé selon la revendication 14, **caractérisé en ce que**, pour la production d'unités d'enroulement qui se succèdent, le fil est d'abord contacté sur les crochets de raccord de commutateur en particulier par une liaison soudée et ensuite l'appui est positionné dans une position angulaire relative modifiée par rapport à l'axe de l'induit discoïdal.

16. Procédé selon la revendication 14 ou 15, **caractérisé en ce que** des unités d'enroulement successives sont disposées sans chevauchements.
